Europäisches Patentamt

European Patent Office

Office européen des brevets

(11) Numéro de publication : **0 501 880 A1**

# (12) DEMANDE DE BREVET EUROPEEN

(21) Numéro de dépôt : **92400493.0**

(22) Date de dépôt : **26.02.92**

(51) Int. Cl.$^5$ : **G01K 11/06**

(30) Priorité : **27.02.91 FR 9102442**
**25.06.91 FR 9107929**

(43) Date de publication de la demande :
**02.09.92 Bulletin 92/36**

(84) Etats contractants désignés :
**BE DE GB IT LU NL**

(71) Demandeur : **SOCIETE COOL S.a.r.l.**
**Quai Jean Jaurès Boîte Postale 45**
**F-07800 La Voulte sur Rhône (FR)**

(72) Inventeur : **Berrebi, Georges**
**17, rue Barnave**
**F-26500 Bourg les Valences (FR)**
Inventeur : **Toporenko, Yves**
**44, 46, rue Saint Maur**
**F-75011 Paris (FR)**

(74) Mandataire : **Andreeff, François**
**INSTITUT FRANCAIS DU PETROLE 4, avenue**
**de Bois-Préau**
**F-92502 Rueil-Malmaison (FR)**

(54) **Indicateur d'état de conservation pour produits réfrigérés ou congelés.**

(57) L'invention concerne un indicateur de conservation pour produits congelés ou réfrigérés et le procédé de mise en oeuvre de cet indicateur.

L'indicateur est constitué d'un étui (1) renfermant un liquide dont le point de congélation est prédéterminé, le dit étui pouvant être en verre, en métal ou en matière plastique et étant entouré soit d'un papier buvard, d'une matière hydrophile, ou d'un film biodégradable.

En phase de congélation, le liquide est sensibilisé par transmission thermique à travers les parois de l'étui en contact avec le produit à surveiller, ce qui a pour conséquence de le solidifier, et provoquer l'ouverture de l'étui.

Une rupture de la chaîne du froid entraîne la liquéfaction du volume solidifié à travers l'ouverture de l'étui et imprègne la matière absorbante ou adsorbante (12).

L'invention est caractérisée en ce que l'ouverture est provoquée par l'éjection d'un bouchon (15) ou par la rupture de l'étui selon une ligne de fracture prédéterminée.

FIG.1

FIG.1A

La présente invention concerne des dispositifs qui permettent de reconnaître immédiatement, par un simple examen visuel, si un produit froid et surtout surgelé est propre ou non à la consommation.

Les surgelés sont des produits sûrs, fabriqués avec une extrême rigueur, présentant des intérêts incontestables sur le plan microbiologique (au-dessous de - 18 °C, les micro-organismes ne se développent plus), toutefois des intoxications alimentaires sont possibles, notamment dans le cas où les surgelés sont accidentellement décongelés puis recongelés.

Un acheteur doit pouvoir vérifier qu'un produit n'a subi aucune rupture de la chaîne de froid. En dehors de l'examen des boîtes ou des paquets proposés sur le marché des consommateurs, cet examen n'étant d'ailleurs pas fiable, on trouve le brevet français relatif aux produits surgelés (à - 18 °C au moins) FR-A-N° 2626072 de Monsieur TOPORENKO proposant un moyen de détection simple et rapide d'une rupture de la chaîne du froid ; en effet, le principe consiste à utiliser un petit glaçon de forme géométrique coloré dans sa masse, fluorescent de surcroît, moulé sur un support, le tout étant intégré à l'intérieur d'une minuscule boîte hermétique transparente qui accompagne l'emballage du produit surgelé d'une façon inviolable.

Des perfectionnements ont été apportés dans des demandes récentes de brevets français de la demanderesse : 90/14341 du 15 novembre 1990 et 91/00101 du 4 janvier 1991.

La présente invention concerne à la fois de nouvelles réalisations pratiques perfectionnées du dispositif de l'art antérieur et des modes de mise en oeuvre.

L'appareillage avec son liquide à base généralement d'un eutectique comprend un intégrateur de température qui prend en compte non seulement la variation de température, mais également sa durée. Il peut être utilisé pour le froid négatif et le froid positif. Ce procédé simple et peu coûteux, a l'avantage d'avoir un fonctionnement irréversible et fiable.

La présente invention concerne notamment un dispositif destiné à être adjoint par fixation (collage ou agrafage) à l'intérieur ou à l'extérieur de l'emballage de protection d'un produit réfrigéré à caractère alimentaire industriel ou pharmaceutique.

L'élément actif du dispositif est généré par la dilatation d'un liquide eutectique de préférence, emprisonné à l'intérieur d'un réservoir (en verre, métal, matière plastique, etc).

Le réservoir ou l'étui se substitue au volume initialement congelé défini dans le brevet FR-A-N° 2626072 de l'art antérieur que l'on pourrait appeler dispositifs de la première génération.

Le remplissage de l'étui ou du réservoir se fait au moyen d'un liquide eutectique de préférence défini dans les demandes de brevets français nommées ci-dessus. Les liquides utilisés peuvent être luminescents, fluorescents, phosphorescents dont les caractéristiques physiques, point de congélation et de décongélation, prédéterminent l'image thermique ou frigorifique du produit réfrigéré auquel il est adjoint.

Le réservoir ou l'étui sont disposés au centre géométrique d'une enceinte hermétique qui peut être un étui ou un simple sachet transparent.

Ils sont réalisés avec une matière colorée dans sa masse, qui de plus, peut être rendue fragile lors de l'abaissement de la température (enveloppe à caractéristiques fragmentaires).

Le principe du dispositif est le suivant :

a) On remplit un étui par exemple une ampoule en verre ou en plastique ou tout autre objet creux en verre ou en plastique adéquat à un remplissage par un liquide par exemple un tube. Cette ampoule est remplie sensiblement complètement par un liquide approprié ("témoin de fusion"), généralement un eutectique, lequel liquide renferme en outre un colorant, par exemple de la fuchsine, de l'hélianthine, de l'indigo, etc.

b) L'ampoule est alors soudée ou est fermée par un bouchon.

c) On entoure l'ampoule d'un morceau de papier buvard ou d'un matériau absorbant adéquat.

d) L'ampoule est disposée à l'intérieur d'un étui ou capsule ou enceinte et la dite capsule (ou étui ou enceinte) est mise dans le paquet renfermant un produit alimentaire gelé ou congelé destiné notamment à la vente.

Supposons que le produit alimentaire doive être congelé ou réfrigéré et doive être conservé à une température T (à titre d'exemple - 30 < T < 0 °). On choisira un liquide témoin de fusion congelant à une température T1 sensiblement égale ou légèrement supérieure (de 1 à 3 °C par exemple) à T. En portant le produit alimentaire à la température T1, le témoin contenu dans l'ampoule congèlera en passant à T1 voisin la température T. Le volume de ce liquide solidifié augmente donc et il en résulte soit une fracture contrôlée de l'ampoule, si celle-ci a été soudée après y avoir introduit le liquide à l'étape (b) ci-dessus, soit une éjection du bouchon si l'ampoule a été fermée par un bouchon à l'étape (b) ci-dessus. Dans les deux cas, les cristaux de l'eutectique s'échappent partiellement au moins de l'ampoule et se répandent sur le buvard ou sur le matériau absorbant mais sans mouiller le buvard ou le matériau ; et il ne se passe rien d'autre si le produit reste à la température T. Mais si par incident la température du produit congelé devient supérieure à T puis supérieure à la température de congélation de l'eutectique, l'eutectique décongelé, devient liquide et mouille le buvard ou le matériau. Simultanément, le colorant présent dans l'ampoule colore le papier buvard ou le matériau absorbant. Il en résulte que le client éventuel ou l'utilisateur ou le responsable des rayons d'alimentation etc... sait alors qu'il y a eu rupture de la chaîne de froid. Même si après l'incident de la rupture de froid, le produit alimentaire est recongelé, il y a un témoin prouvant la rupture de la chaîne de froid.

Le procédé de l'invention permet d'ailleurs de pouvoir éventuellement savoir jusqu'où la température est "remontée" en disposant dans le même paquet plusieurs ampoules renfermant des colorants différents réglées chacune pour des températures différentes de congélation par des choix d'eutectiques différents.

On peut imaginer, à titre d'exemple, un produit qui doit rester en dessous de - 20 °C. On peut mettre dans le paquet une série de capsules ou enceintes, chaque capsule renfermant son ampoule :

– une première ampoule renfermera un eutectique congelant à - 19 °C avec un colorant rouge par exemple du rose de Bengale,

– une deuxième ampoule renfermant un eutectique congelant à - 15 °C et contenant un colorant vert,

– un troisième tube renfermant un eutectique congelant à - 12 °C contenant par exemple un colorant fluoré,

– un quatrième tube renfermant de l'eau congelant donc à 0 °C renfermant un colorant par exemple le bleu de méthylène.

Le paquet alimentaire est congelé vers - 20 °C. Si plus tard un observateur note que le buvard enveloppant la première ampoule est rouge mais que les autres buvards sont intacts, cela signifiera qu'il y a eu rupture de la chaîne de froid mais que cette rupture est raisonnablement limitée parce que la température n'est pas montée jusqu'à -15 °C. Si les buvards enveloppant les trois premières ampoules sont colorés, cela signifie que la rupture de chaîne de froid a été sérieuse même si 0 °C n'a pas été atteint, etc...

Les ampoules ou tubes etc... peuvent être en verre normal ou en verre feuilleté ou en tout autre matériau équivalent qui se rompt sous l'effet de l'augmentation de volume de l'eutectique lorsqu'il congèle, par exemple, une matière plastique, telle que PVC, polyester, polyacrylamide, celluloïd, etc...

L'exemple précédent concerne un produit alimentaire mais d'autres applications sont celles concernant notamment la conservation de sérums, de sang, de vaccins, etc... même si ces produits bénéficient généralement de techniques de conservation très sophistiquées dans les hôpitaux ou laboratoires, de telles techniques ne pouvant malheureusement pas être adaptables lors de campagnes militaires ou d'assistance à des populations en détresse.

Les liquides utilisables dans la présente invention à titre de témoin de fusion peuvent être ceux décrits dans les deux brevets français de la demanderesse EN 90/14341 et EN/9100101.

Le principe de l'invention consiste à provoquer la cristallisation du liquide témoin enfermé dans son étui. Cette cristallisation se produit à la congélation du produit alimentaire ou autre à surveiller et provoque une ouverture ou une déchirure de l'étui. Les cristaux se répandent hors de l'étui. Si une rupture de la chaîne de froid se produit les cristaux fondent. Dans la présente invention, il est essentiel que l'ouverture de l'étui soit contrôlée. A cette fin, ou bien l'étui est fermé par au moins un bouchon qui est éjecté lors de la cristallisation, (ceci se traduisant donc par l'ouverture de l'étui) ou bien l'étui renferme au moins une ligne de fracture prédéterminée ou réalisée plus tard, de sorte que sous l'effet de la cristallisation l'étui se brise relativement proprement de façon contrôlée ou bien encore l'étui renferme à la fois un bouchon et une ligne de fracture. On trouve dans la littérature des documents qui décrivent l'emploi de capsules ou d'ampoules (étui ou réservoir) qui éclatent lors de la congélation du liquide qu'elles contiennent. Lorsqu'il y a rupture de la chaîne de froid les cristaux fondent et se répandent sur un témoin indicateur du changement d'état (par coloration notamment). Mais il s'agit toujours d'un éclatement ou d'une cassure importante de la capsule ou de l'ampoule (étui ou réservoir) : voir notamment US-A-3702007, FR-A-2143132, DE-A-2165004 ou FR-A-1601889.

Dans la présence invention, l'étui ou réservoir peut être équipé d'un ou plusieurs bouchons ou soupapes qui se soulèveraient lors de l'expansion en phase de congélation du liquide qui les remplit. La conception du bouchon (biodégradable à la limite) ou de la soupape (bouchon avec ressort) est telle que celui-ci, ou celle-ci, dégage suffisamment leur siège afin de permettre l'écoulement du liquide lors de la phase de décongélation (rupture de la chaîne du froid).

Lorsque l'étui ou le réservoir ne possède pas de bouchon éjectable ou soupape, une ligne de fracture peut être prédéterminée lors de la fabrication de ceux-ci par exemple lors d'une extrusion d'un étui cylindrique en affaiblissant la paroi suivant une génératrice longitudinale, ou en disposant, à l'intérieur de l'étui ou du réservoir, un antagonisme mécanique élastique mis en compression, constitué par un circlips ou une gouttière en acier ou en matière plastique.

En résumé l'invention se caractérisé par une ouverture de l'étui par débouchage de l'étui ou par cassure de l'étui (cassure contrôlée).

L'antagonisme élastique de ces dispositifs mis en compression favorisera la réalisation d'une ligne de fracture lors de la congélation du liquide, cette fracture sera ainsi largement ouverte afin de permettre l'écoulement du liquide eutectique par exemple à la phase de décongélation (rupture de la chaîne du froid).

Pour marquer l'écoulement du liquide lors de la décongélation (rupture de la chaîne du froid) plusieurs éléments d'observation pourront être utilisés selon la conception du dispositif, à savoir :

1. en entourant l'étui ou le réservoir d'une matière hydrophile (coton, papier buvard, etc) qui se coloreront au contact du liquide qui s'écoulera de l'étui ou du réservoir.

2. en enveloppant l'étui ou le réservoir d'un film biodégradable qui disparaîtra en rendant visible le corps de l'étui ou du réservoir dont les parois externes sont fortement colorées à la fabrication, ou enduites d'une peinture fluorescente vive.

Il comporte un témoin de fusion matérialisé par un volume géométrique obtenu par congélation d'une substance liquide qui est de préférence colorée dans sa masse, afin de la rendre plus visible de l'extérieur de l'emballage de protection dans lequel elle se trouve placée. Ce liquide peut être luminescent, fluorescent, phosphorescent selon les cas ; il est constitué par la congélation d'un liquide auquel sont mélangés différents adjuvants (produits colorants, luminescents, fluorescents, phosphorescents, antigel) de façon à prédéterminer l'image thermique ou frigorifique du produit réfrigéré auquel il est adjoint.

Le témoin de fusion est placé au centre géométrique d'une enceinte hermétique qui peut être constituée d'un simple sachet ou étui.

Le sachet ou étui (cylindre, ampoule, anneau, prisme, sphère, parallélépipède -cube en particulier- etc.) sont munis d'index de centrage dans leurs parties internes, de façon à pouvoir disposer le témoin de fusion au centre géométrique de leur cavité ; ils sont rendus étanches par construction après inclusion du témoin de fusion.

Les dessins annexés illustrent l'invention.

Les dessins 1 à 3 représentent un indicateur d'état qui comprend : un boîtier étanche (2) en matière plastique transparente à l'intérieur duquel a été disposé un étui (1) ou un conteneur (ampoule de verre par exemple) entièrement rempli d'un liquide non toxique dont le point de congélation est préréglé (- 12 °C, - 16 °C ou - 21 °C).

L'ampoule de verre est centrée de manière que son centre géométrique se superpose et se confonde avec le centre géométrique du volume intérieur du boîtier d'où la nécessité d'utiliser des supports, qui peuvent venir lors du moulage du boîtier, ou sont constitués par des éléments amovibles en papier épais, ayant un rôle d'amortisseurs en cas de choc.

Lorsque l'on place le conditionnement dans une ambiance de congélation, l'abaissement de la température provoque la dilatation du liquide qui se trouve emprisonné à l'intérieur de l'ampoule et engendre la destruction de celle-ci.

Il en résulte la mise en suspension à l'intérieur du boîtier d'un volume congelé.

On peut réaliser le boîtier étanche, en matière plastique transparente, par thermoformage ou injection. Le boîtier aura un volume adapté au conditionnement auquel il sera adjoint.

On utilise un liquide ou une matière non toxique de nature ou garanti par un procès verbal d'essais établi par un laboratoire agréé lorsqu'il s'agit d'un produit de synthèse.

Lorsque la partie fusible de l'indicateur d'état est liquide à une température supérieure ou égale à 0 °Centigrade, il est utilisé un conteneur qui peut être une ampoule de verre à caractéristiques fragmentaires, une enveloppe constituée par un film mince biodégradable pouvant disparaître avec le temps ou lors de l'abaissement de la température. Contenance 1 à 2 millilitres par exemple.

Si le boîtier étanche en matière plastique n'est pas équipé d'index de positionnement, il sera fait usage d'axes orthogonaux en P.V.C. colorés ou non, qui assureront une certaine rigidité à la masse de matière ou de liquide congelé et permettront son centrage éventuel à l'intérieur du boîtier (un axe en verre peut être utilisé).

L'indicateur d'état de conservation réalisé, devra faire l'objet de son efficacité réelle, et d'autre part, à la vérification que les produits utilisés pour sa conception sont conformes aux dispositions réglementaires relatives aux matériaux au contact des aliments (décret 73-138 du 12 février 1973, J.O. du 15 février 1973) et au caractère alimentaire des différentes substances qu'il contient afin de garantir la sécurité du consommateur en cas d'écoulement hors du dispositif au moment de la décongélation.

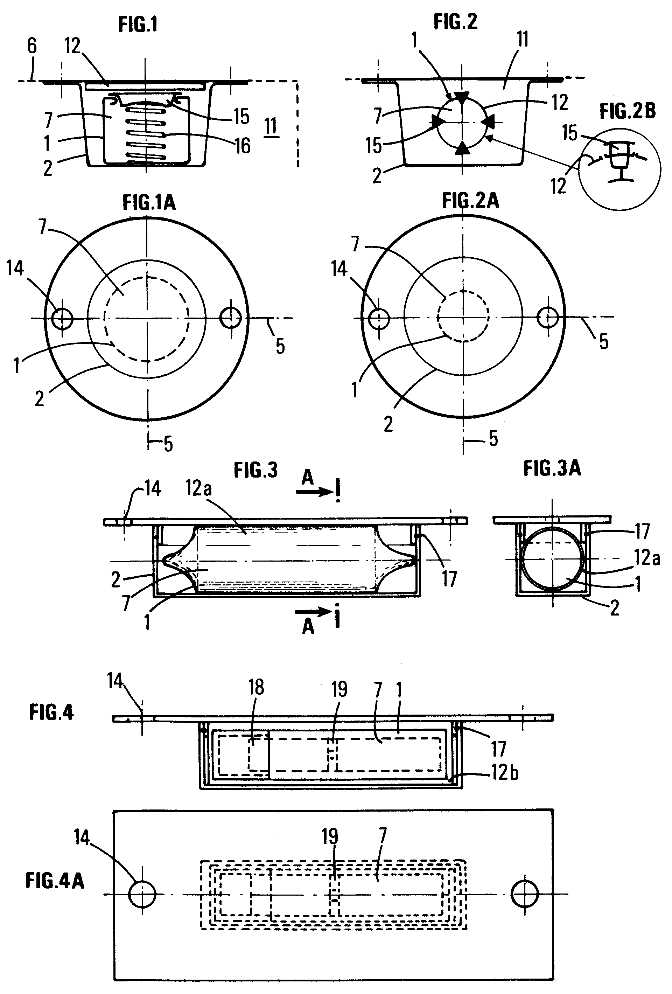

La figure 1 décrit un premier type d'indicateur de conservation pour produits réfrigérés ou congelés comportant :

    – un boîtier thermoformé (2) (fermeture par pliage, étanchéité par collage à titre d'exemple) de préférence en matière plastique transparente ;
    – un étui (1) en matière plastique, ou en verre, ou en métal renfermant un liquide (7) (eutectique par exemple) l'étui étant au moins en partie entouré d'une matière absorbante (12) par exemple un papier absorbant ou buvard ou coton hydrophile agissant par coloration au liquide.

Selon un des modes de l'invention, l'indicateur renferme également : un bouchon (15) par exemple en matière plastique souple, colorée dans la masse.

L'indicateur peut comporter un ressort (16) pour maintenir l'ouverture (bouchon). Le boîtier est maintenu par des points d'ancrage (14) et est accroché à l'emballage (6) du produit alimentaire (11) à conserver.

La figure 2 représente une variante de la figure 1 avec en outre le détail d'un bouchon (15) conforme à l'invention.

Les figures 3 et 3 A représentent à titre d'illustration un indicateur d'état avec un étui en verre et renfermant (autour de l'axe A-A) :

    – un boîtier (2) par exemple en matière plastique,
    – un étui (1) en verre à paroi mince qui, conformément à un mode de l'invention, se cassera selon une ligne de fracture prédéterminée suivant une génératrice longitudinale,
    – un liquide eutectique (7),
    – des trous d'ancrage (14),

– un cylindre en papier buvard (12-A) entourant l'étui,

– un joint intégré de verrouillage (17).

Les figures 4 et 4A représentent à titre d'illustration un indicateur d'état avec un étui en matière plastique et circlips de dilatation et renfermant :

– un boîtier (2) par exemple en matière plastique,

– un étui (1) en matière plastique,

– un liquide eutectique (7),

– une masse d'absorption 12-b qui entoure au moins en partie l'étui,

– un joint intégré de verrouillage (17).

L'indicateur d'état renfermant en outre conformément aux modes de l'invention :

– un bouchon à emboîtement conique (18) disposé sur l'étui,

– un circlips (19) destiné à augmenter la fissure de l'enveloppe du tube, cette fissure ayant été provoquée par la dilatation du liquide eutectique.

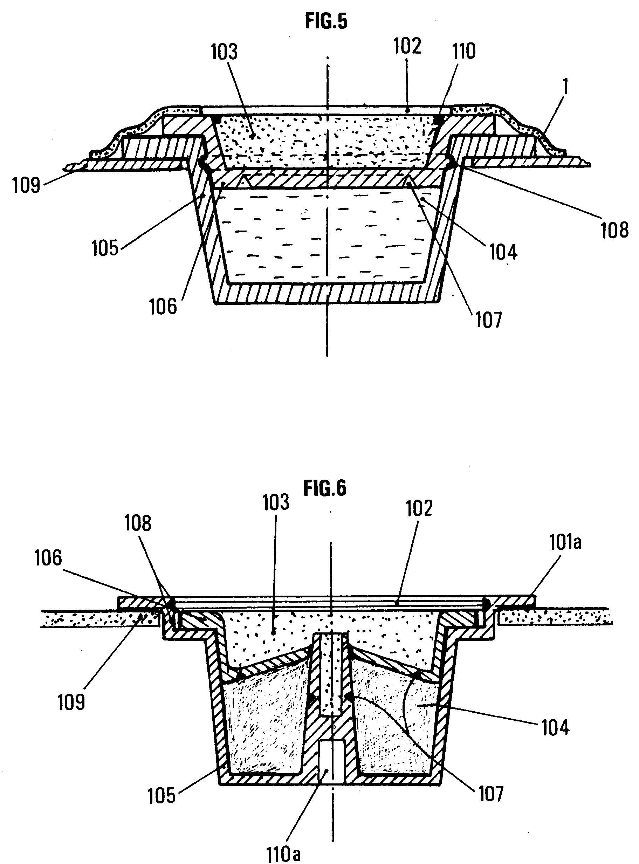

Les figures 5 et suivantes représentent divers perfectionnements du procédé et des dispositifs utilisés.

Dans ces perfectionnements, le boîtier qui contient l'étui est supprimé. De plus, l'étui est tel qu'il renferme un emboîtement de deux réservoirs, l'un renfermant le liquide eutectique et l'autre l'adsorbant ou l'absorbant. Ces deux réservoirs sont séparés par une paroi ou membrane de séparation qui fait office soit de bouchon (qui sera éjecté par cristallisation du liquide), soit de paroi brisable de façon contrôlée sous l'effet de la cristallisation du liquide.

Au cours de la fabrication et du conditionnement des produits surgelés en usine, il peut être prévu à la phase finale des opérations, lors de l'emballage la mise en place d'un indicateur de conservation. Pour répondre à cet impératif une fenêtre sera prévue dans l'emballage afin d'y adapter ce dispositif de manière à le rendre visible et observable de l'extérieur, et de ce fait le rend inviolable. Il peut être fait usage d'un adhésif pour maintenir le dispositif sur l'emballage.

Les dispositifs peuvent se caractériser par l'utilisation d'un étui (par exemple en métal, verre ou en matière plastique) obtenu par l'assemblage d'éléments emboîtés conduisant à l'obtention de deux réservoirs à paroi mitoyenne (bouchon ou membrane brisable), un réservoir étant destiné au liquide eutectique, l'autre étant garni de matière absorbante ou adsorbante destinée à révéler, par exemple, par coloration le fonctionnement du dispositif. De manière préférée, l'invention concerne un indicateur d'état de conservation caractérisé par l'obtention d'un réservoir étanche et à remplissage total de liquide obtenu par emboîtement de deux boîtes ou coupelles homothétiques et dont la fermeture est verrouillée par un joint annulaire ou clip qui peut éventuellement être collé.

L'indicateur d'état de conservation est également éventuellement caractérisé par l'emboîtement de deux éléments homothétiques (réceptacles, coupelles, boîtes, etc), dont l'élément emboîtant (ou mâle) est pourvu dans son fond et au centre de celui-ci d'une tubulure tronconique intérieurement qui lors de la fermeture, se trouve guidée et obstruée par un axe tronconique disposé axialement dans le fond de la coupelle ou du réceptacle (ou élément femelle) constituant le corps extérieur de l'étui.

Selon divers perfectionnements on peut concevoir un indicateur d'état de conservation caractérisé par l'utilisation d'une coupelle (où boîte mâle) traversant une partie cylindrique ou corps creux, qui après fermeture par emboîtement réalise un réservoir à liquide étanche, et conteneur à matière absorbante ou adsorbante ou encore un indicateur d'état de conservation caractérisé par l'utilisation d'une goupille creuse de forme tronconique extérieurement qui vient s'appliquer sur des sièges correspondants à ses surfaces extérieures disposés en traversée d'une cavité afin d'obtenir un réservoir étanche pour le liquide eutectique.

L'indicateur d'état de conservation comporte généralement un hublot transparent fixé par emboîtement, collage, encliquetage sur la partie supérieure de l'élément mâle, cette partie étant emboîtée de façon à réaliser un conteneur ou réservoir étanche destiné à la matière absorbante ou adsorbante.

L'indicateur d'état de conservation peut renfermer des clips de fermeture garantissant l'inviolabilité et l'étanchéité du système.

Conformément aux modes de l'invention on peut utiliser un indicateur d'état de conservation, caractérisé par l'utilisation de saignées rectilignes, circulaires ou brisées, créant des amincissements de la paroi de séparation disposée entre les deux réservoirs (liquide et matière d'imprégnation) de façon à constituer des lignes de striction et d'orientation des fractures.

Il peut être utile que l'indicateur d'état de conservation se définisse encore par la conception des éléments assemblés de l'étui afin d'éviter une épaisseur importante au niveau de l'emballage, le hublot d'observation pouvant recevoir un aménagement servant à l'amarrage du dispositif dans son ensemble.

Selon un autre mode préféré, l'indicateur d'état de conservation est caractérisé par une métallisation partielle ou totale des parois extérieures de l'étui, lorsque celui-ci est réalisé en matière plastique, afin d'ajuster le coefficient de transmission du dispositif en fonction du volume de matière à surveiller et du coefficient de déperdition inhérent à l'emballage.

L'indicateur d'état de conservation également peut être caractérisé par l'utilisation d'un plot de centrage, d'un axe, d'une tubulure, ou d'un système de guidage lors de l'emboîtement de l'élément mâle constituant l'étui. Cet axe, plot, tubulure de guidage pouvant être solidaire de la partie femelle ou en partie des deux éléments emboîtables de l'étui, il peut être conçu à rendre les éléments imperdables ; il contribue au dégazage du réservoir lors du remplissage de liquide, et assure l'obturation et l'étanchéité du réservoir après remplissage.

L'indicateur d'état de conservation est caractérisé par son fonctionnement dans toutes les positions et l'irréversibilité de sa réaction, et est caractérisé par la possibilité éventuelle d'obscurcir complètement le hublot d'observation du dispositif afin de rendre inutilisable la lecture du code barres lorsque celui-ci se trouve placé dessus.

Enfin l'indicateur d'état de conservation peut se caractériser par la conception de son étui qui permet l'adaptation de sondes droites ou coudées afin d'améliorer la sensibilité du dispositif.

Un premier type de dispositif perfectionné concerne un indicateur de conservation pour produits congelés ou réfrigérés (et également le procédé de mise en oeuvre de cet indicateur).

L'indicateur est constitué d'un étui ou réservoir (voir figure 5) comprenant un corps (105) et un bouchon (106) renfermant un liquide ou une matière colorée (104) dont le point de congélation est prédéterminé.

En phase de congélation le liquide (104) est sensibilisé par transmission thermique à travers les parois de l'étui en contact avec le produit à surveiller, ce qui a pour conséquence de le solidifier, et provoquer la rupture de l'étui.

Une rupture de la chaîne du froid entraîne la liquéfaction du volume solidifié à travers la fracture de l'étui et imprègne la matière absorbante ou adsorbante (103) qui est placée dans la cavité du bouchon de l'étui.

Sur la figure :

101. est un ruban adhésif pelable dans la partie destinée à être collée sur l'emballage,
102. est un hublot maintenu par l'adhésif ou emboîté sur le bouchon (106),
106. est le dit bouchon (de préférence tronconique) de l'étui,
107. est une zone de striction,
108. est un clip,
109. est l'emballage,
et
110 est une griffe.

Un deuxième type de dispositif perfectionné conforme à l'invention est illustré par la figure 6.

L'indicateur renferme un ruban adhésif double face (101a), un hublot transparent encliqueté (102), une matière absorbante ou adsorbante (103), un liquide eutectique ou matière équivalente (104), un corps de l'étui ou du réservoir (105), un bouchon (106) de préférence tronconique de l'étui encliqueté sur le corps, une zone de striction (107), un clip (108), un emballage du produit à surveiller (109) et une cavité (110a) réservée pour l'adaptation d'une sonde.

Comme indiqué plus haut, les dispositifs perfectionnés de l'invention permettent en outre d'éviter l'utilisation d'un boîtier de protection des figures 1 à 4.

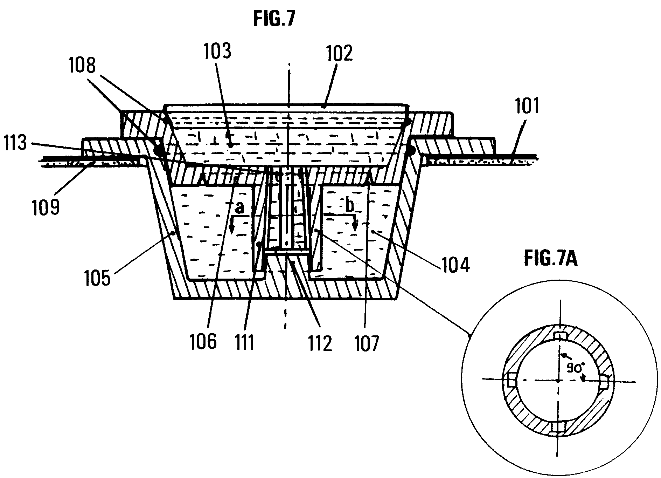

A titre d'illustration supplémentaire (voir figure 7), le dispositif est constitué d'un étui (métal, verre, plastique) de forme géométrique, qui se compose d'un corps (105) ayant des caractéristiques physiques très résistantes, il est muni sur ses parois extérieures d'un ou plusieurs éléments de fixation et d'amarrage, choisis et adaptés aux emballages auxquels il est destiné. La partie extérieure du corps de l'étui peut être totalement ou partiellement métallisée afin de pouvoir ajuster le coefficient de transmission des parois de l'étui en fonction du coefficient de dispersion de l'emballage et du volume du produit à surveiller. L'appareil comporte les éléments suivants :

101) Ruban adhésif pelable double face collé sur l'emballage,
102) Hublot transparent encliqueté,
103) Matière absorbante ou adsorbante,
104) Liquide eutectique ou matière équivalente,
105) Corps de l'étui ou du réservoir,
106) Bouchon tronconique de l'étui encliqueté sur le corps,
107) Zone de striction,
108) Clip,
109) Emballage,
111) Tubulure,
112) Axe ou plot,
113) Cannelures longitudinales (voir détail sur figure 7).

A l'intérieur du corps (105) de l'étui vient s'adapter par emboîtement un bouchon (106) qui peut selon les cas être :

1° Un élément homothétique du corps (105) qui lors de la fermeture par emboîtement, crée une cavité ou réservoir d'une étanchéité parfaite pour le liquide eutectique (104).

2° Un élément homothétique du corps (105), similaire au cas précédent, mais pourvu dans son fond d'une partie tubulaire tronconique (111) qui à l'emboîtement vient s'appliquer et s'ajuster serré sur un plot (112) disposé dans le fond du corps de l'étui.

3° Une goupille creuse ou dispositif équivalent traversant le corps (105) de l'étui afin d'y constituer une cavité ; dans ce cas corps et goupille sont munis de plans de joint d'obturation adaptés à la forme géométrique qui les caractérisé.

Le bouchon (106) reçoit par encliquetage, collage ou intégration à un adhésif pelable, un couvercle transparent ou hublot (102) disposé à sa partie supérieure fermant ainsi sa cavité intérieure dans laquelle on a placé une matière absorbante ou adsorbante (103).

Le bouchon (106) suivant sa conception est pourvu de lignes de striction (107) affectant les parois de séparation des réservoirs contenant le liquide eutectique et la matière absorbante ou adsorbante (103) ; ces lignes de striction longitudinales ou circulaires sont destinées à orienter les fractures du bouchon lors de l'expansion du liquide en phase de congélation, et mettre ce dernier en contact avec les matières absorbantes ou adsorbantes (103) du dispositif.

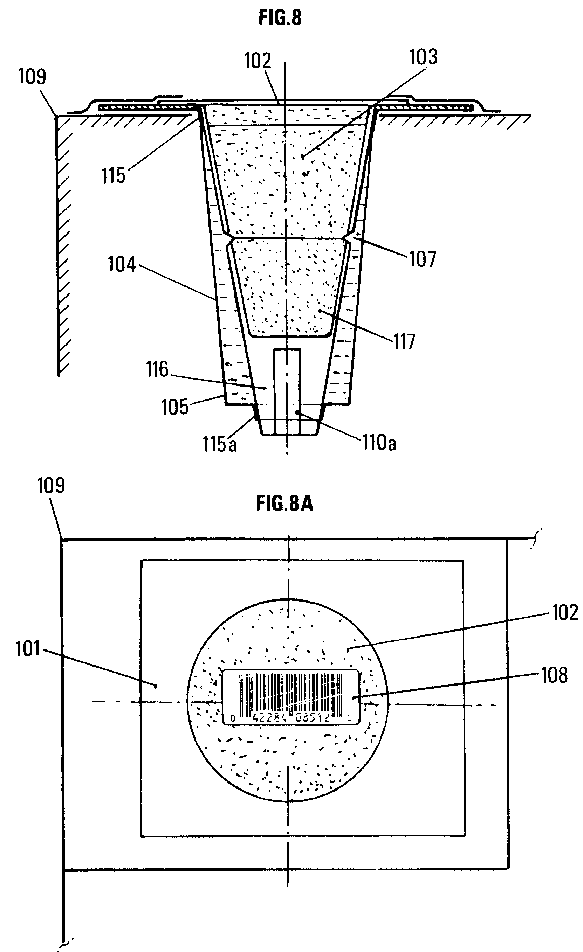

La figure (8) qui est une variante des dispositifs précédents reprend les éléments essentiels des figures précédentes. La figure 8-a est une vue en coupe. En outre (114) représente le produit alimentaire surgelé, (115) et (115-a) des obturations coniques, (116) une clavette, (110-a) une partie creuse de la clavette permettant de raccorder une sonde, (117) une partie évidée de la clavette et (118) (sur la figure 8-a -vue de dessus-) le "code barres" par exemple du produit alimentaire disposé sur une face d'un hublot montrant une coloration de cette face, lorsque le produit alimentaire est décongelé. Ainsi la décongélation provoque la coloration de la matière hydrophile, visible à travers le hublot du détecteur sur lequel se trouve placé le code barres, rendant celui ci illisible.

Le principe du dispositif selon l'invention est le suivant et s'applique à chacune des figures: le réservoir, plus précisément l'étui (105) est rempli complètement par un liquide approprié (104), généralement un eutectique, lequel liquide renferme en outre un colorant, par exemple de la fuchsine, de l'hélianthine, de l'indigo, etc.

Lorsque l'on place le dispositif dans une ambiance de congélation, l'abaissement de la température provoque la dilatation (et la congélation) du liquide qui se trouve emprisonné à l'intérieur de l'étui, et engendre la fracture de celui-ci, et plus particulièrement aux endroits où la paroi d'un bouchon ou d'une goupille a été affaiblie conformément aux modes de la présente invention. Il en résulte la mise en suspension à l'intérieur du réservoir ou de l'étui d'un volume congelé, le dispositif se trouvant alors placé en état de veille.

En phase accidentelle ou volontaire de décongélation, l'eutectique fond et le liquide eutectique s'écoule (par suite de la fusion du volume congelé provenant de l'étui) et entre en contact avec la matière absorbante ou adsorbante (103) en l'imprégnant et en la colorant (coton hydrophile, mèche capillaire, ponce, etc). La face interne du hublot (102) mouillée par le liquide provenant de l'étui, peut faire apparaître certaines mentions ("produit décongelé", "attention ne pas recongeler") ou colorer très fortement celle-ci de manière à interdire la lecture d'un "code barres" ((118) sur la figure 8-a) si celui-ci est placé sur le hublot, et ainsi interdire la vente du produit lorsque la décongélation a eu lieu.

Les figures représentent des modèles d'indicateur d'état de conservation destiné à accompagner des aliments conditionnés dans un emballage rigide (carton ou autre produit) dans lequel a été aménagé un compartiment adapté à recevoir ce dispositif.

## Revendications

1. Procédé de mise en oeuvre d'un indicateur d'état de conservation pour produit congelé ou réfrigéré de type industriel, médical ou alimentaire, le dit indicateur comportant un étui renfermant au moins un colorant et un témoin de fusion représenté par un volume géométrique d'une substance congelable, l'étui étant moulé sur un dispositif support placé à l'intérieur d'un boîtier ou enveloppe de protection, le procédé dans lequel pour pouvoir mettre en évidence la rupture éventuelle de la chaîne de froid du dit produit congelé ou réfrigéré et conservé à une température T :

   (a) on introduit au moins un témoin de fusion, de point de congélation T1 égale ou légèrement supérieure à T dans sensiblement la majeure partie de l'étui.
   (b) on ferme l'étui (par soudure ou par un bouchon).
   (c) on entoure l'étui d'une matière absorbante.
   (d) on introduit éventuellement l'étui dans un boîtier.
   (e) et on place le dit étui et son boîtier éventuel dans le dit produit,
   procédé dans lequel en outre :
   – on refroidit le dit produit à une température de conservation T,
   – au cours de ce refroidissement au moins un témoin de fusion passe par la température T1, température à laquelle le dit témoin congèle en provoquant par l'augmentation de volume qu'il subit l'ouverture de l'étui,
   – les cristaux du témoin de fusion congelé à la température T1 se répandent au moins en partie sur une matière absorbante disposée au voisinage immédiat de l'étui ouvert, le procédé étant caractérisé en ce que l'ouverture de l'étui se produit soit par éjection d'au moins un bouchon qui fermait l'étui à l'étape (b), la dite éjection se produisant lorsque le dit témoin de fusion congelé et provoque une augmentation de volume de ce témoin, soit par brisure contrôlée de l'étui le long d'au moins une ligne de fracture prédéterminée lors de la fabrication de l'étui ou réalisée par un antagonisme mécanique élastique mis en compression, soit encore par association bouchon-ligne de fracture.

2. Procédé selon la revendication 1 dans lequel on utilise, outre un étui renfermant un témoin de fusion congelant à la température T1 voisine de T, au moins un autre étui renfermant au moins un témoin de fusion congelant à une température T2 supérieure à T1.

3. Indicateur de conservation pour produits réfrigérés ou congelés comportant (pour la mise en oeuvre du procédé selon l'une des revendications 1 et 2) :

    – un boîtier thermoformé (2),

    – un étui (1) en matière plastique, ou en verre, ou en métal renfermant un liquide (7), l'étui étant au moins en partie entouré d'une matière absorbante (12), l'indicateur étant caractérisé en ce qu'il renferme également un bouchon éjectable (15) qui ferme l'étui et qui est expulsé lors de la cristallisation du dit liquide ou en ce que l'étui a au moins une paroi affaiblie par une ligne de fracture.

4. Indicateur d'état avec un étui en verre selon la revendication 3 et renfermant :

    – un boîtier (2),

    – un étui (1) en verre à paroi mince,

    – un liquide eutectique (7),

    – des trous d'ancrage (14),

    – un cylindre en papier buvard (12-A) entourant au moins en partie l'étui,

    – un joint intégré de verrouillage (17),

    – un bouchon qui ferme l'étui et qui est éjectable lors de la cristallisation du dit liquide ou une ligne de fracture sur l'étui affaiblissement au moins une paroi de l'étui suivant une génératrice longitudinale et prédéterminée lors de la fabrication de l'étui ou réalisée par un antagonisme mécanique élastique mis en compression.

5. Indicateur d'état selon la revendication 4 avec un étui en matière plastique et circlips de dilatation et renfermant :

    – un boîtier (2),

    – un étui (1) en matière plastique,

    – un liquide eutectique (7),

    – une masse d'absorption 12-b qui entoure au moins en partie l'étui,

    – un joint intégré de verrouillage (17), l'indicateur d'état étant caractérisé en ce qu'il renferme en outre :

    – un bouchon à emboîtement conique (18) disposé sur l'étui,

    – un circlips 119) destiné à augmenter la fissure de l'enveloppe du tube, cette fissure ayant été provoquée par la dilatation du liquide eutectique.

6. Procédé selon l'une des revendications 1 et 2 de mise en oeuvre d'un indicateur d'état de conservation pour produit congelé ou réfrigéré de type industriel, médical ou alimentaire, caractérisé par l'utilisation d'un étui dépourvu d'un boîtier et obtenu par l'assemblage d'éléments emboîtés conduisant à l'obtention de deux réservoirs à paroi mitoyenne, un réservoir étant destiné au liquide eutectique, l'autre étant garni de matière absorbante ou adsorbante destinée à révéler par coloration le fonctionnement du dispositif, les deux réservoirs étant séparés par une paroi qui sous l'effet de la cristallisation du liquide s'ouvre ou se brise de façon contrôlée.

7. Indicateur d'état de conservation selon la revendication 6 caractérisé par l'obtention dans l'étui d'un réservoir étanche et à remplissage total de liquide obtenu par emboîtement de deux boites ou coupelles homothétiques et dont la fermeture est verrouillée par un joint annulaire ou clip qui peut éventuellement être collé, l'indicateur étant en outre caractérisé par l'utilisation de saignées rectilignes, circulaires ou brisées, créant des amincissements de la paroi de séparation disposée entre les deux réservoirs (liquide et matière d'imprégnation) de façon à constituer des lignes de striction et d'orientation d'une fracture ou d'une ouverture de la dite paroi de séparation.

8. Indicateur d'état de conservation selon la revendication 7 caractérisé par l'emboîtement de deux éléments homothétiques (réceptacles, coupelles, boîtes, etc) dont l'élément emboîtant (ou mâle) est pourvu dans son fond et au centre de celui-ci d'une tubulure tronconique intérieurement qui lors de la fermeture, se trouve guidée et obstruée par un axe tronconique disposé axialement dans le fond de la coupelle ou d'un réceptacle ou élément femelle constituant le corps extérieur de l'étui.

9. Indicateur d'état de conservation selon l'une des revendications 7 et 8 caractérisé par l'utilisation d'une coupelle ou boîte mâle traversant une partie cylindrique ou corps creux, qui après fermeture par emboîtement réalise un réservoir à liquide étanche et un conteneur (réservoir) à matière absorbante ou adsorbante.

10. Indicateur d'état de conservation selon l'une des revendications 1 à 4 caractérisé par l'utilisation d'une goupille creuse de forme tronconique extérieurement qui vient s'appliquer sur des sièges correspondants à ses surfaces extérieures disposés en traversée d'une cavité afin d'obtenir un réservoir étanche pour le liquide eutectique.

11. Indicateur d'état de conservation selon l'une des revendications 7 à 10 caractérisé par l'utilisation d'un étui, muni sur ses parois extérieures de surfaces, de pattes de fixation, d'éléments d'amarrage, ou d'adhésif d'ancrage.

12. Indicateur d'état de conservation selon l'une des revendications 7 à 11 caractérisé par l'utilisation d'un hublot transparent fixé par emboîtement, collage, encliquetage sur la partie supérieure de l'élément mâle emboîtée, de façon à réaliser un conteneur ou réservoir étanche destiné à la matière absorbante ou adsorbante.

13. Indicateur d'état de conservation selon l'une des revendications 7 à 12 caractérisé par l'utilisation de clips de fermeture garantissant l'inviolabilité et l'étanchéité du système.

14. Indicateur d'état de conservation (selon l'une des revendications 7 à 13) caractérisé par une métallisation partielle ou totale des parois extérieures de l'étui, lorsque celui-ci est réalisé en matière plastique, afin d'ajuster le coefficient de transmission du dispositif en fonction du volume de matière à surveiller et du coefficient de déperdition inhérent à l'emballage.

15. Indicateur d'état de conservation selon l'une des revendications 7 à 14 caractérisé par l'utilisation d'un plot de centrage, d'un axe, d'une tubulure, ou d'un système de guidage lors de l'emboîtement de l'élément mâle constituant l'étui, ce dit axe, plot, tubulure de guidage pouvant être solidaire de la partie femelle ou en partie des deux éléments emboîtables de l'étui, pouvant être conçu pour rendre les éléments imperdables, contribuant au dégazage du réservoir lors du remplissage de liquide et assurant l'obturation et l'étanchéité du réservoir après remplissage.

16. Indicateur d'état de conservation selon l'une des revendications 7 à 15 caractérisé en ce que l'étui est rempli d'un liquide sensiblement eutectique dont le point de fusion eutectique est entre 0 et - 30 °C, ce mélange contenant approximativement 30-35 % en poids de carbamide et 65-70 % en poids d'eau.

17. Indicateur d'état de conservation selon l'une des revendications 7 à 16 caractérisé par la possibilité d'obscurcir complètement le hublot d'observation du dispositif afin de rendre inutilisable la lecture du code barres lorsque celui-ci se trouve placé dessus.

FIG.1

FIG.2

FIG.2B

FIG.1A

FIG.2A

FIG.3

FIG.3A

FIG.4

FIG.4A

**FIG.5**

**FIG.6**

## FIG.7

## FIG.7A

**FIG.8**

**FIG.8A**

**Office européen des brevets**

# RAPPORT DE RECHERCHE EUROPEENNE

Numero de la demande

EP 92 40 0493

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 702 077 (BELA G. SZABO) * colonne 2, ligne 58 - colonne 4, ligne 22; figures 1-9 * | 1,2,5 | G01K11/06 |
| X | FR-A-2 143 132 (BAUMGARTNER PAPIERS S.A.) * page 13, ligne 22 - page 15, ligne 7; figures 7-10 * | 1,2,4 | |
| X | FR-A-1 601 889 (STUDIENGESELLSCHAFT KOHLE MBH) | 1 | |
| X | DE-A-2 165 004 (ARTECH CO.) | 1,2,5 | |
| Y | * le document en entier * | 6,7,11 | |
| Y | GB-A-2 051 361 (FRANCO SALA) * le document en entier * | 6 | |
| Y | GB-A-1 604 648 (KIRKHAM) * le document en entier * | 7-13,17 | |
| Y | US-A-3 220 259 (BEYER) * colonne 4, ligne 57 - colonne 5, ligne 33; figures 11-13 * | 8-10,12 | DOMAINES TECHNIQUES RECHERCHES (Int. Cl.5) |
| Y | US-A-4 051 804 (GARNETT) * abrégé; figure 1 * | 13 | G01K |
| Y | EP-A-0 250 217 (GENERAL ELECTRIC COMPANY) * abrégé; figure 6 * | 17 | |
| A | US-A-4 327 117 (LENACK) * colonne 5, ligne 25 - colonne 9, ligne 35; figures * | 1,2,4 | |

Le présent rapport a été établi pour toutes les revendications

| Lieu de la recherche | Date d'achèvement de la recherche | Examinateur |
|---|---|---|
| LA HAYE | 10 JUIN 1992 | BATTESON A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)